**Europäisches Patentamt**

**European Patent Office**

**Office européen des brevets**

(11) Veröffentlichungsnummer: **0 145 860**
**B1**

(12) # EUROPÄISCHE PATENTSCHRIFT

(45) Veröffentlichungstag der Patentschrift:
**20.04.88**

(51) Int. Cl.⁴: **B 23 B 31/16**

(21) Anmeldenummer: **84111268.3**

(22) Anmeldetag: **21.09.84**

(54) **Palette zur Aufnahme von Aufsatzspannbacken.**

(30) Priorität: **13.12.83 DE 3345012**

(43) Veröffentlichungstag der Anmeldung:
**26.06.85 Patentblatt 85/26**

(45) Bekanntmachung des Hinweises auf die Patenterteilung:
**20.04.88 Patentblatt 88/16**

(84) Benannte Vertragsstaaten:
**DE FR GB IT SE**

(56) Entgegenhaltungen:
**DE - A - 2 248 403**
**DE - A - 2 509 698**
**FR - A - 2 125 100**
**GB - A - 150 669**

(73) Patentinhaber: **SMW Schneider & Weisshaupt GmbH,
Wiesentalstrasse 28, D-7996 Meckenbeuren (DE)**

(72) Erfinder: **Hiestand, Karl, Mühlweg 2, D-7798 Pfullendorf
(DE)**

(74) Vertreter: **Engelhardt, Guido, Dipl.-Ing.,
Montafonstrasse 35 Postfach 1350,
D-7990 Friedrichshafen 1 (DE)**

## Beschreibung

Die Erfindung bezieht sich auf eine Palette zur Aufnahme von Aufsatzspannbacken, die mit den Grundbacken eines Spannfutters verrastbar sind, wobei die Palette mit die Aufatzspannbacken aufnehmende entsprechend der Teilung der Grundbacken im Futterkörper des Spannfutters gegeneinander versetzt angeordnete radial gerichtete und stirnseitig offene Aussparungen aufweist.

Eine Palette dieser Art ist durch die DE-AS 2 104 904 bekannt. Die die Aufsatzspannbacken aufnehmenden Aussparungen sind hierbei durch in die scheibenförmig gestaltete Palette eingearbeitete Durchbrüche sowie durch seitlich neben diesen aufgesetzte Führungsleisten gebildet. Zur Halterung der Aufsatzspannbacken dienen an den einander zugekehrten Flächen der Führungsleisten angebrachte Kugelrasten, die, wenn die Aufsatzspannbacken plan an der Palette anliegen, in in deren Seitenflächen vorgesehene keilförmige Längsnuten eingreifen.

Da die Aufsatzspannbacken mit einem in Achsrichtung abstehenden Ansatzteil in die Durchbrüche der Palette hineinragen, ist somit sowohl beim Einsetzen der Aufsatzspannbacken in die Palette wie auch bei der Entnahme eine äusserst genaue Führung in Achsrichtung erforderlich. Ein derartiges genaues Arbeiten ist aber mit Handhabungsgeräten nicht zu bewerkstelligen, so dass diese Paletten trotz des relativ grossen Bauaufwandes für maschinellen Backenwechsel nicht verwendbar sind. Vor allem aber ist bei dieser Ausgestaltung von Nachteil, dass die Palette der Form der jeweils zu verwendenden Aufsatzspannbacken anzupassen ist und dass diese nur in einer vorgegebenen Einspannlage in die Palette eingesetzt werden können. Für jeden unterschiedlichen Backenaufsatz ist demnach eine entsprechend ausgebildete Palette notwendig. Dies bedingt wiederum eine grosse Lagerhaltung an Paletten.

Aufgabe der Erfindung ist es daher, eine Palette zur Aufnahme von Aufsatzspannbacken der vorgenannten Gattung zu schaffen, bei der es möglich ist, die Aufsatzspannbacken problemlos in die Ausnehmumgen der Palette einzusetzen und auch der Palette zu entnehmen, ohne dass dabei die Aufsatzspannbacken seitlich zu führen sind und ohne dass diese dabei zwischen den Führungsflächen verkanten. Die Zentrierung und Fixierung der Aufsatzspannbacken in der Palette soll vielmehr erst erfolgen, und zwar selbsttätig, wenn sich diese in der vorbestimmten Endstellung befinden. Des weiteren soll die konstruktive Ausgestaltung der Palette einfach sein, so dass eine wirtschaftliche Herstellung gegeben ist. Vor allem aber soll erreicht werden, dass die Paletten universell für alle Spannbackensätze eines Spannfutters zu verwenden und somit kostenintensive Lagerhaltungen vermieden sind.

Gemäss der Erfindung wird dies dadurch erreicht, dass zur Halterung der Aufsatzspannbacken in den Ausnehmungen der Palette in diese beiderseits einer jeden Ausnehmung jeweils ein oder mehrere begrenzt senkrecht zur Längsachse der Aufsatzspannbacke verschiebbar angeordnete und von einer Druckkraft beaufschlagbare Spannbolzen eingesetzt sind, mittels denen die Aufsatzspannbacken in einer definierten Lage in der Palette einspannbar und die zur Entnahme der Aufsatzspannbacken entriegelbar sind.

Zweckmässig ist es hierbei, um die Aufsatzspannbacken betriebssicher zu halten, deren Seitenflächen mit Aussparungen zu versehen, in die die Spannbolzen einrastbar sind.

Zur Begrenzung der Zustellbewegung der Spannbolzen ist es angebracht, diese jeweils mit einer Anschlagfläche vorzugsweise in Form eines angeformten Bundes auszustatten, der mit einer an der Palette oder einem in diese eingesetzten Zwischenglied angebrachten Gegenfläche zusammenwirkt.

Des weiteren sollten zur Zentrierung der Aufsatzspannbacken in den Ausnehmungen der Palette die Spannbolzen mit einer mit den Aufsatzspannbacken zusammenwirkenden Anlagefläche versehen sein, wobei der Abstand zwischen dieser und der Anschlagfläche derart zu bestimmen, ist dass in Endlage der Spannbolzen die Aufsatzspannbacken mittig in den Ausnehmungen gehalten sind.

Die in die Aufsatzspannbacken eingreifenden Enden der Spannbolzen und die diese jeweils aufnehmenden Aussparungen der Aufsatzspannbacken sollten, um die Aufsatzspannbacken entnehmen zu können, keilförmig, vorzugsweise kegelförmig, ausgebildet sein. Auf diese Weise können die Spannbolzen durch die aneinanderliegenden Keilflächen, wobei die an den Enden der Spannbolzen vorgesehenen Keilflächen die Anlageflächen bilden, zurückgedrückt werden.

Nach einer andersartigen Ausgestaltung ist es aber auch möglich, bei als zylindrische Bohrungen ausgestalteten die Enden der Spannbolzen aufnehmenden Aussparungen der Aufsatzspannbacken die Spannbolzen mit einem Bund zur Abstützung an den Aufsatzspannbacken vorzusehen. In diesem Fall bildet der Bund die Anlagefläche, auch sind die Spannbolzen bei einer Spannbackenentnahme gesondert zurückzuführen.

Zweckmässig ist es ferner, die Aufsatzspannbacken mit seitlichem Spiel in den Ausnehmungen der Palette zu führen und die in dieser vorgesehenen Ausnehmungen als durchgehende glattflächige Freisparungen auszubilden. Dies ermöglicht eine besonders wirtschaftliche Bearbeitung der Ausnehmungen und erleichtert das Bestücken der Palette mit Aufsatzspannbacken.

Die die Spannbolzen aufnehmenden Zwischenglieder sind in einfacher Ausgestaltung als in die Palette eingesetzte Büchsen auszubilden, die eine abgesetzte Aufnahmebohrung aufweisen. Hierbei ist es angebracht, die Büchsen in Achsrichtung verstellbar anzuordnen, vorzugsweise in eine in die Palette eingearbeitete Gewindebohrung einzuschrauben, so dass die Lage der Anschlagfläche leicht verändert und somit eingestellt werden kann.

Die Spannbolzen können jeweils durch die Kraft einer oder mehrerer an der Palette abgestützter Druckfedern beaufschlagt werden, es ist aber auch möglich, auf der den Aufsatzspannbacken abgewandten Seite der Spannbolzen einen von Druckmittel beaufschlagbaren Verstellkolben vorzusehen, so dass eine kraftbetätigte Zustellung gegeben ist, wobei die Spannkraft leicht eingestellt und zur Entnahme der Aufsatzspannbacken aufgehoben werden kann. Bei dieser Ausgestaltung ist es des weiteren angebracht, die Spannbolzen mittels einer auf diese in Richtung der Aufsatzspannbacken einwirkenden Feder vorzuspannen.

Nach einer Weiterbildung können die Spannbolzen auf der den Aufsatzspannbacken abgewandten Seite auch mit einem beidseitig von Druckmittel beaufschlagbaren Verstellkolben versehen werden, so dass deren Zu- und Rückstellung steuerbar ist.

Eine besonders betriebssichere Halterung der Aufsatzspannbacken ist gegeben, wenn auf jeder Seite einer Ausnehmung jeweils zwei in radialer Richtung hintereinander angeordnete achssenkrecht auf die Aufsatzspannbacken einwirkende Spannbolzen fluchtend zueinander angeordnet werden.

Vorteilhaft ist es ferner, zur Aufnahme unterschiedlich hoch bemessener Aufsatzspannbacken in den Ausnehmungen der Palette sich in Achsrichtung erstreckende Einsatzstücke auswechselbar anzuordnen.

Um die Aufsatzspannbacken in Koppelstellung zu arretieren, ist es des weiteren angezeigt, die Grundbacken mit einer axial verstellbaren Federraste und die Aufsatzspannbacken mit einer mit dieser zusammenwirkenden Aufnahmebohrung zu versehen, in die die Raststifte der Federrasten bei mit den Grundbacken verriegelten Aufsatzspannbacken eingreifen.

Zum Betätigen der Raststifte der Federrasten beim Entkoppeln der Aufsatzspannbacken sollten ferner an der Palette ein in die Aufnahmebohrung der Aufsatzspannbacken eingreifender Entriegelungsbolzen angebracht sein, die jeweils einen angeformten vorzugsweise mehrkantig gestalteten Bund als Einsatzszück aufweisen können.

Zur Einspannung der Palette in eine Zustellvorrichtung, beispielsweise ein Handhabungsgerät, ist es angebracht, die Palette auf der den Ausnehmungen gegenüberliegenden Seite mit einem in Achsrichtung abstehenden Bund, mit Aufnahmebohrungen oder dgl. zu versehen. Wird hierbei der Durchmesser des Bundes entsprechend dem Durchmesser des zu bearbeitenden Werkstückes gewählt, kann dieses, ohne dass Umstellungen an dem Handhabungsgerät vorzunehmen sind, von diesem erfasst und in das Spannfutter eingesetzt werden.

Um die Palette z.B. in einem Magazin aufhängen zu können, sollte diese mit in deren Stirnfläche eingearbeiteten vorzugsweise zwischen den Ausnehmungen angeordneten und mit einer Hinterschneidung versehene Aufhängebohrungen aufweisen.

Die in die Palette einsetzbaren Aufsatzspannbacken können jeweils aus einer Kassette, in deren Seitenflächen die Ausnehmungen zur Aufnahme der Spannbolzen eingesetzt sind, und einem auswechselbar mit der Kassette verbundenen an deren radial inneren und/oder äusseren Stirnflächen angebrachten Spanneinsatz zusammengesetzt werden. Durch Auswechseln der Spanneinsätze können somit rasch Aufsatzspannbackensätze für unterschiedliche Werkstückdurchmesser erstellt werden.

Die gemäss der Erfindung ausgebildete Palette zur Aufnahme von Aufsatzspannbacken ist nicht nur sehr einfach in der konstruktiven Ausgestaltung und somit ohne Schwierigkeiten auf wirtschaftliche Weise zu fertigen, sondern diese ermöglicht auch einen raschen problemlosen Wechsel von Aufsatzspannbacken in einem Spannfutter. Werden nämlich zur Halterung der Aufsatzspannbacken in den Ausnehmungen der Palette begrenzt verschiebbare und von einer Druckkraft beaufschlagte Spannbolzen vorgesehen, durch die die Aufsatzspannbacken in einer definierten Lage einspannbar und die zu deren Entnahme entriegelbar sind, so ist es möglich, die Ausnehmungen entsprechend gross zu dimensionieren, so dass weder beim Einsetzen der Aufsatzspannbacken in die Ausnehmungen der Palette noch bei der Herausnahme Verkantungen auftreten. Dennoch ist gewährleistet, dass die Aufsatzspannbacken stets betriebssicher in einer vorgegebenen Lage, in der eine Koppelung mit den Grundbacken des Spannfutters ohne weiteres zu bewerkstelligen ist, gehalten werden.

Des weiteren ist von Vorteil, dass mittels einer Paletten-Ausgestaltung auch unterschiedlich ausgebildete Aufsatzspannbacken einem Spannfutter zugeführt werden können. Lediglich die Aufnahme für die Spannbolzen ist an unterschiedlichen Aufsatzspannbacken jeweils gleich zu gestalten, um diese in den Ausnehmungen der Palette zu halten. Aufsatzspannbacken können somit, sofern die Koppelglieder dies ermöglichen, auch für eine Innen- und Aussenspannung verwendet werden. Und da die Zentrierung der Aufsatzspannbacken mittels der Spannbolzen selbsttätig erst in der Endlage erfolgt, ist das Bestücken einer Palette und deren Zuführung zu einem Spannfutter auch mittels Handhabungsgeräten möglich.

In der Zeichnung ist ein Ausführungsbeispiel einer gemäss der Erfindung ausgebildeten Palette zur Aufnahme von Aufsatzspannbacken dargestellt und nachfolgend im einzelnen erläutert. Hierbei zeigen:

Fig. 1 eine mit Aufsatzspannbacken bestückte Palette mit dem zugeordneten Spannfutter in einem Axialschnitt,

Fig. 2 die Palette nach Fig. 1 in Vorderansicht und teilweise im Schnitt,

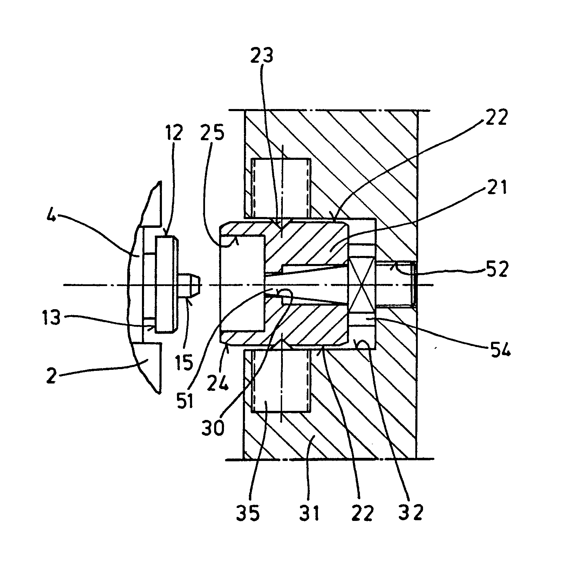

Fig. 3 eine Draufsicht auf die Anordnung nach Fig. 1, und

Fig. 4 und 5 die Palette nach Fig. 1 in Vorderansicht und teilweise im Schnitt mit unterschiedlich ausgebildeten Spannbolzen.

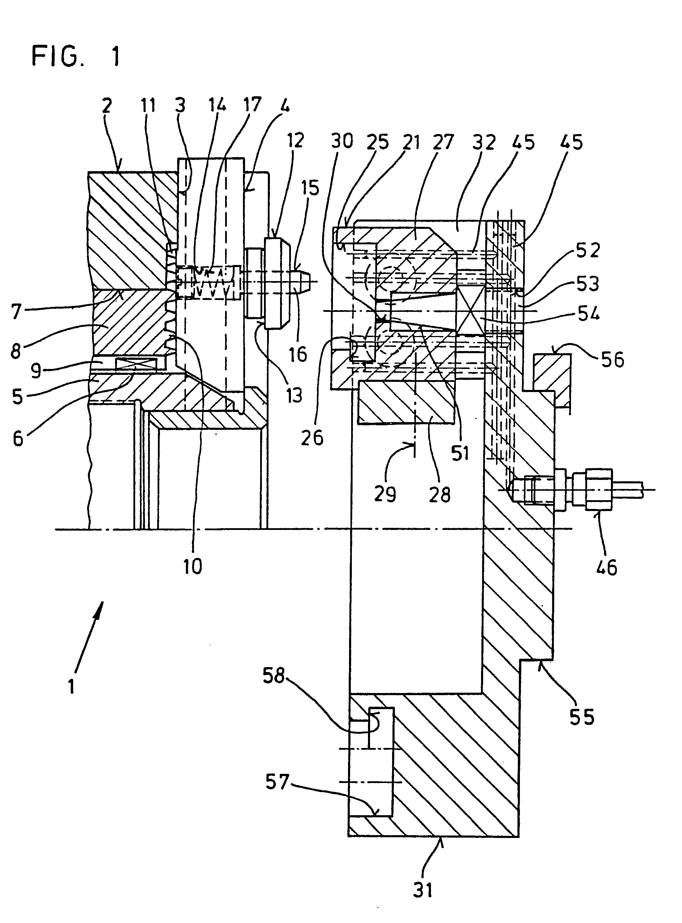

Das in Fig. 1 dargestellte und mit 1 bezeichnete Spannfutter weist mehrere, vorzugsweise drei gleichmässig über den Umfang eines Futterkörpers 2 in radial gerichteten Nuten 3 verschiebbar geführte Grundbacken 4 auf, die von einem zentrischen Verstellglied 5 über Keilstangen 8 antreibbar sind. Dazu sind die in tangential gerichteten Ausnehmungen 7 des Futterkörpers 2 eingesetzte Keilstangen 8 jeweils mit einer Keilnut 9, in die das Verstellglied 5 mit angeformten Nasen 6 eingreift, sowie mit einer Verzahnung 10, mit der eine an den Grundbacken 4 angearbeitete Verzahnung 11 in Eingriff ist, versehen. Auf diese Weise wird, da die Keilnuten 9 und die Nasen 6 in Achsrichtung geneigt sind, eine axiale Verschiebung des Verstellgliedes 5 in eine Radialbewegung der Grundbacken 4 umgelenkt.

Um auf einfache Weise Aufsatzspannbacken 21 auf die Grundbacken 4 aufsetzen zu können, ist an diesen ein pilzartiger Ansatz 12 angeformt, der mit einer Hinterschneidung 13 versehen ist, und die Aufsatzspannbacken 21 weisen eine den Ansatz 12 aufnehmende Aussparung 25 auf, die ebenfalls mit einer Hinterschneidung 26 ausgestattet ist. Der zylindrisch ausgebildete Ansatz 12 hintergreift somit bei auf die Grundbacken 4 aufgesetzten Aufsatzspannbacken 21 die Hinterschneidung 26, so dass diese auf einer mondsichelförmigen Fläche sicher abgestützt sind.

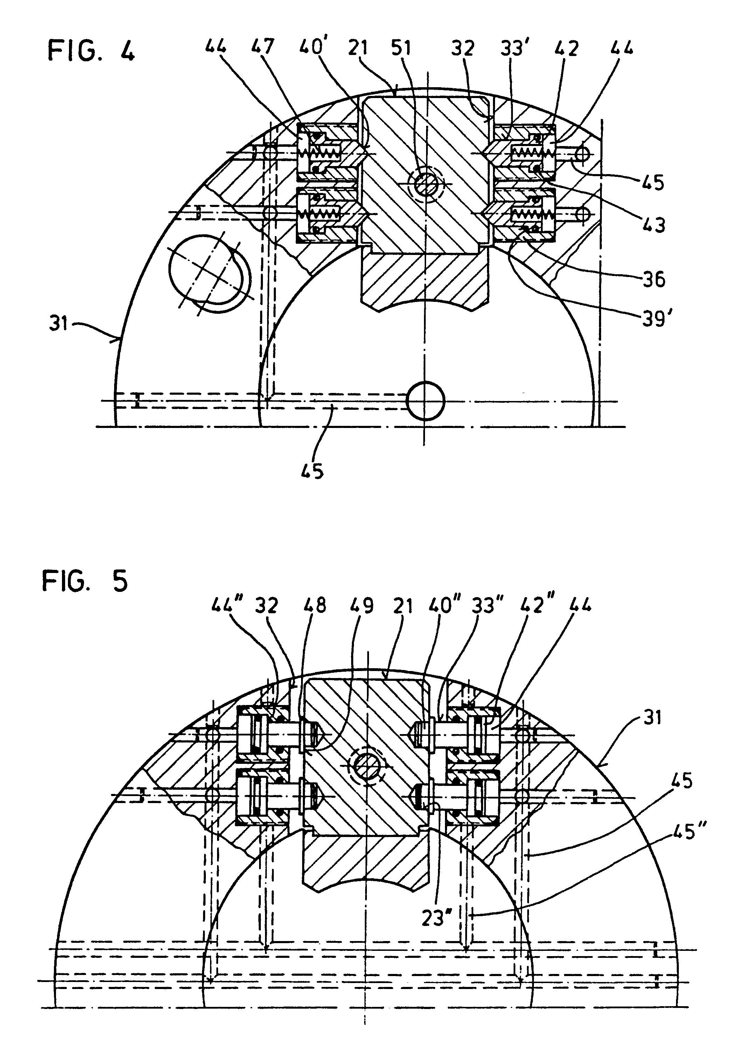

Um die Aufsatzspannbacken 21 dem Spannfutter 1 mittels einer Zustellvorrichtung 56, eines Handhabungsgerätes oder auf andere Weise maschinell zuführen zu können, ist eine Palette 31 vorgesehen, in der die Aufsatzspannbacken 21 gehalten sind. Die Palette 31 ist dazu mit entsprechend der Teilung der Grundbacken 4 des Spannfutters 1 angeordneten radial gerichteten Ausnehmungen 32 versehen, in denen die Aufsatzspannbacken 21 mittels achssenkrecht auf diese einwirkende Spannbolzen 33, die nach den Ausgestaltungen der Fig. 4 und 5 andersartig ausgebildet und mit 33' bzw. 33'' bezeichnet sind, eingespannt sind. Durch die in die Seitenflächen 22 der Aufsatzspannbacken 21 eingearbeiteten Aussparungen 23 bzw. 23'' eingreifenden Spannbolzen 33 bzw. 33' bzw. 33'' werden die Aufsatzspannbacken 21 in den gross bemessenen Ausnehmungen 32 zentriert.

Um dies bewerkstelligen zu können, sind die jeweils von einer Druckkraft beaufschlagten Spannbolzen 33, 33', 33'' in Richtung der Aufsatzspannbacken 21 begrenzt verschiebbar angeordnet und die gemeinsame Anlage an diesen ist nur in einer definierten Lage möglich. Dazu sind die Spannbolzen 33, 33', mit einer durch einen angeformten Bund 38 bzw. einem Verstellkolben 42 gebildete Anschlagfläche 39, 39' sowie durch deren kegelförmig gestalteten Spitzen 40, 40' geschaffenen Anlageflächen versehen, die mit Gegenflächen 37 bzw. den Aufsatzspannbacken 21 zusammenwirken. Der Abstand zwischen den Anschlagflächen 39, 39' und der Anlage an den Aufsatzspannbacken 21 ist hierbei derart gewählt, dass in Endlage der Spannbolzen 33, 33' die Aufsatzspannbacken 21 mittig in den Ausnehmungen 23 gehalten sind.

Die Spannbolzen 33, 33', 33'' sind jeweils in in die Palette 31 eingearbeitete Gewindebohrungen 34 eingeschraubte Büchsen 35 eingesetzt, die mit abgesetzten Aufnahmebohrungen 36 versehen sind. Dadurch sind nicht nur die Gegenflächen 37 gebildet, sondern deren Lage kann auch leicht im Bedarfsfall verändert werden.

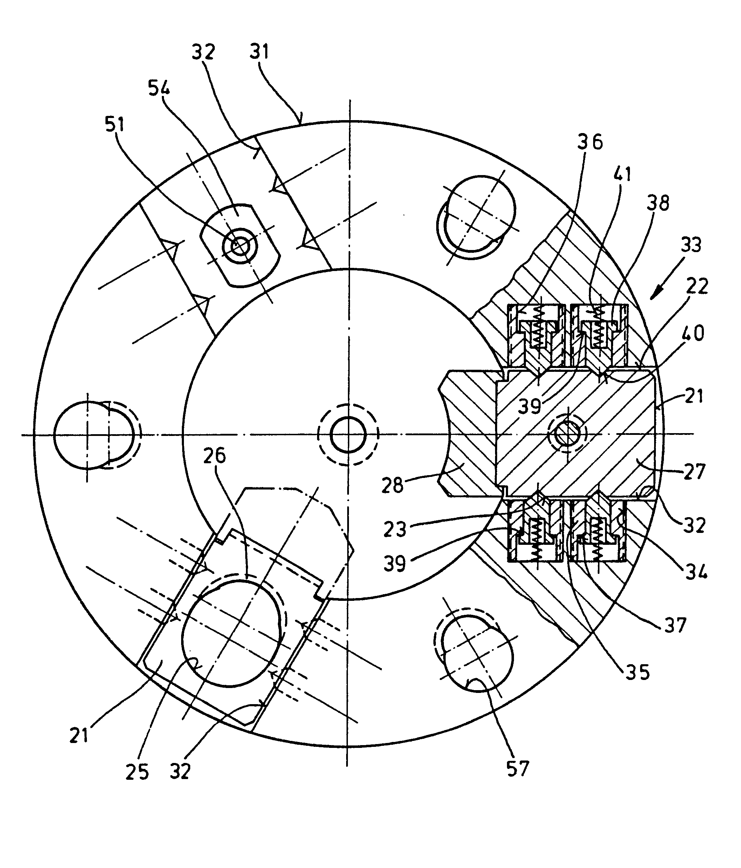

Bei der Ausgestaltung nach Fig. 2 sind die Spannbolzen 33 von der Kraft einer Druckfeder 41 beaufschlagt, die an der Palette 31 abgestützt ist. Gemäss Fig. 4 kann aber auch an den Spannbolzen 33', um die Aufsatzspannbacken 21 einspannen zu können, ein einseitig von Druckmittel beaufschlagbarer Verstellkolben 42 vorgesehen werden. Dazu ist lediglich in den angeformten Bund eine Dichtung 43 einzusetzen und dem somit geschaffenen Druckraum 44 ist über Kanäle 45, die mittels eines Anschlussnippels 46 mit einer Druckmittelquelle zu verbinden sind, Druckmittel zuzuführen. Die Spannbolzen 33' sind hierbei durch eine Feder 47 geringfügig vorgespannt, so dass auch ohne Druckmittelzuführung eine Einspannung möglich ist.

Bei der Ausgestaltung nach Fig. 5 sind die Enden 40'' der Spannbolzen 33'' zylindrisch ausgebildet und greifen in die als zylindrische Bohrungen gestalteten Aussparungen 23'' der Aufsatzspannbacken 21 ein. Um diese den Ausnehmungen 32 entnehmen zu können, sind die Spannbolzen 33'' mit einem beidseitig von Druckmittel beaufschlagbaren Verstellkolben 42'' ausgestattet, dem die Druckräume 44 und 44'' zugeordnet und an die die Druckmittelzuführungskanäle 45 und 45'' angeschlossen sind. Die mit den Aufsatzspannbacken 21 zusammenwirkenden Anlageflächen 49 sind bei dieser Ausgestaltung durch jeweils einen an den Spannbolzen 33'' angebrachten Bund 48 gebildet.

Soll das Spannfutter 1 mit den in der Palette 31 gehaltenen Aufsatzspannbacken 21 bestückt werden, so ist diese derart nach links zu verstellen, dass die an den Grundacken 4 angearbeiteten Ansätze 12 in die Ausnehmungen 25 der Aufsatzspannbacken 21 eingeführt werden. Die mit einer Einführschräge 24 ausgestatteten Aufsatzspannbacken 21 greifen dabei auch teilweise mit in die Nuten 3 des Futterkörpers 2 ein, so dass diese somit seitlich geführt sind. Bei dieser Zustellbewegung werden die Raststifte 16 einer jeweils in einer Bohrung 14 der Grundbacken 4 eingesetzten Federraste 15 entgegen der Kraft einer Feder 17 nach innen gedrückt. Sobald die Ansätze 12 mit ihrer Stirnfläche am Grund der Ausnehmung 25 der Aufsatzspannbacken 21 anliegen, werden die Grundbacken 4 mit Hilfe des Verstellgliedes 5 nach innen verschoben, so dass die Ansätze 12 in die Hinterschneidungen 26 einrasten und die Aufsatzspannbacken 21 somit, da der Raststift 16 der Federraste 15 in eine in die Aufsatzspannbacken 21 eingearbeitete Aufnahmebohrung 30 durch die Kraft der Feder 17 gedrückt wird, sicher mit den Grundbacken 4 verriegelt sind. Durch eine Axialbewegung kann die Palette 31 von den Aufsatzspannbacken 21 gelöst werden.

Da die Spitzen 40 der Spannbolzen 33, 33' und die diese aufnehmenden Ausnehmungen 23 der Aufsatzspannbacken 21 kegelförmig gestaltet sind, werden durch die Bewegung der Palette 31 die Spannbolzen 33 bzw. 33' entgegen der Kraft der auf diese einwirkenden Federn 41 bzw. 47 dabei selbsttätig zurückgeschoben. Selbstverständlich sind bei der Ausgestaltung nach Fig. 4 die Druckräume 44 dabei gegebenenfalls zu entlüften. Dagegen ist bei dem Ausführungsbeispiel nach Fig. 5 den Druckräumen 44'' bei entlüfteten Druckräumen 44 Druckmittel zuzuführen, um die Spannbolzen 33'' aus den Ausnehmungen 23'' herauszuziehen.

Um die auf den Grundbacken 4 aufgesetzten Aufsatzspannbacken 21 wiederum von der Palette 31 aufzunehmen, ist diese derart in Richtung des Spannfutters 1 nach links zu verstellen, dass die Spannbolzen 33, 33' bzw. 33'' in die in die Seitenflächen 22 der Aufsatzspannbacken 21 eingearbeiteten Aussparungen 23'' eingreifen. Bei dieser Zustellbewegung werden die Raststifte 16 der Federraste 15 durch an der Palette 31 angebrachte Entriegelungsbolzen 51, die in die Aufnahmebohrung 30 hineinragen, wiederum zurückgedrückt, so dass durch eine Verstellbewegung der Grundbacken 4 nach aussen die Aufsatzspannbacken 21 entkoppelt sind. Selbstverständlich ist bei den Ausführungsbeispielen mach den Fig. 4 und 5 die Druckmittelzufuhr entsprechend zu steuern.

Das Aufsetzen der Aufsatzspannbacken 21 auf die Grundbacken 4 sowie das Entnehmen ist demnach mit Hilfe der Palette 31 maschinell in kurzer Zeit ohne Schwierigkeiten und ohne dass dabei Verkantungen in den ausreichend breit bemessenen Ausnehmungen 32 auftreten, zu bewerkstelligen.

Die Aufsatzspannbacken 21 sind bei dem gezeigten Ausführungsbeispiel jeweils aus einer Kassette 27 und einem Spanneinsatz 28, die mittels Schrauben 29 miteinander verbunden sind, zusammengesetzt. Durch Auswechseln der Spanneinsätze 28, die auch auf den äusseren Stirnseiten der Kassette 27 angebracht werden können, sind somit ohne weiteres Aufsatzspannbacken für Werkstücke mit unterschiedlichen Durchmessern zu schaffen.

Die Entriegelungsbolzen 51 sind mittels Gewindeansätzen 53 in Gewindebohrungen 52 der Palette 31 eingeschraubt und mit einem als Mehrkant ausgebildeten Bund 54 ausgestattet, der als Einsatzstück in den Ausnehmungen 32 angeordnet ist. Durch die Höhe des Bundes 54, an dem die Aufsatzspannbacken 21 flächig anliegen, können somit, indem die Entriegelungsbolzen 51 ausgetauscht werden, unterschiedliche Höhen der Aufsatzspannbacken ausgeglichen werden.

Um die Palette 31 mittels der Zustellvorrichtung 56 leicht transportieren zu können, ist des weiteren auf der den Ausnehmungen 32 gegenüberliegenden Stirnseite ein axial abstehender Bund 55 angearbeitet, an dem die Zustellvorrichtung 56 eingreifen kann. Wird der Bund 55 in seinem Durchmesser etwa gleich gross bemessen wie die mittels der in einer Palette 31 eingesetzten Aufsatzspannbacken einzuspannenden Werkstücke, so ist bei deren Zuführung mittels der Zustellvorrichtung 56 keine Änderung vorzunehmen. Der Transport der Palette 31 kann auch mittels anderer Verstellglieder, die in mit Hinterschneidungen 58 versehenen, zwischen den Ausnehmungen 32 angeordneten Aufnahmebohrungen 57 eingreifen, bewerkstelligt werden.

**Patentansprüche**

1. Palette (31) zur Aufnahme von Aufsatzspannbacken (21), die mit den Grundbacken (4) eines Spannfutters (1) verrastbar sind, wobei die Palette mit die Aufsatzspannbacken aufnehmende entsprechend der Teilung der Grundbacken im Futterkörper des Spannfutters gegeneinander versetzt angeordnete radial gerichtete und stirnseitig offene Ausnehmungen (32) aufweist, dadurch gekennzeichnet, dass zur Halterung der Aufsatzspannbacken (21) in den Ausnehmungen (32) der Palette (31) in diese beiderseits einer jeden Ausnehmung (32) jeweils ein oder mehrere begrenzt senkrecht zur Längsachse der Aufsatzspannbacke veschiebbar angeordnete und von einer Druckkraft beaufschlagbare Spannbolzen (33; 33'; 33'') eingesetzt sind, mittels denen die Aufsatzspannbacken (21) in einer definierten Lage in der Palette (31) einspannbar und die zur Entnahme der Aufsatzspannbacken (21) entriegelbar sind.

2. Palette nach Anspruch 1, dadurch gekennzeichnet, dass die Aufsatzspannbacken (21) in ihren Seitenflächen mit Aussparungen (23; 23'') versehen sind, in die die Spannbolzen (33; 33'; 33'') einrastbar sind.

3. Palette nach Anspruch 1 oder 2, dadurch gekennzeichnet, dass zur Begrenzung der Zustellbewegung der Spannbolzen (33; 33'; 33'') diese jeweils mit einer Anschlagfläche (39) vorzugsweise in Form eines angeformten Bundes (38) versehen sind, der mit einer an der Palette (31) oder einem in diese eingesetzten Zwischenglied (Büchse 36) angebrachten Gegenfläche (37) zusammenwirkt.

4. Palette nach einem oder mehreren der Ansprüche 1 bis 3, dadurch gekennzeichnet, dass zur Zentrierung der Aufsatzspannbacken (21) in den Ausnehmungen (32) der Palette (31) die Spannbolzen (33; 33'; 33'') mit einer mit den Aufsatzspannbacken (21) zusammenwirkenden Anlagefläche (40; 49) versehen sind, wobei der Abstand zwischen dieser und der Anschlagfläche (39) derart bestimmt ist, dass in Endlage der Spannbolzen (33; 33'; 33'') die Aufsatzspannbacken (21) mittig in den Ausnehmungen (32) gehalten sind.

5. Palette nach einem oder mehreren der Ansprüche 1 bis 4, dadurch gekennzeichnet, dass die in die Aufsatzspannbacken (21) eingreifenden Enden (40) der Spannbolzen (33; 33') und die diese jeweils aufnehmenden Aussparungen (23) der Aufsatzspannbacken (21) keilförmig vorzugsweise kegelförmig ausgebildet sind.

6. Palette nach einem oder mehreren der Ansprüche 1 bis 4, dadurch gekennzeichnet, dass bei als zylindrische Bohrungen ausgestalteten die Enden (40'') der Spannbolzen (33'') aufnehmenden Aussparungen (23'') der Aufsatzspannbacken (21) die Spannbolzen (33'') mit einem Bund (48) zur Abstützung an den Aufsatzspannbacken (21) versehen sind.

7. Palette nach einem oder mehreren der Ansprüche 1 bis 6, dadurch gekennzeichnet, dass die Aufsatzspannbacken (21) mit seitlichem Spiel in die Ausnehmungen (32) der Palette (31) geführt sind.

8. Palette nach einem oder mehreren der Ansprüche 1 bis 7, dadurch gekennzeichnet, dass die in die Palette (31) eingearbeiteten Ausnehmungen (32) als durchgehende glattflächige Freisparungen ausgebildet sind.

9. Palette nach einem oder mehreren der Ansprüche 1 bis 8, dadurch gekennzeichnet, dass die die Spannbolzen (33; 33'; 33'') aufnehmenden Zwischenglieder als in die Palette (31) eingesetzte Büchse (35) ausgebildet sind, die eine abgesetzte Aufnahmebohrung (36) aufweisen.

10. Palette nach einem oder mehreren der Ansprüche 1 bis 9, dadurch gekennzeichnet, dass die Büchsen (35) in Achsrichtung verstellbar angeordnet, vorzugsweise in eine in die Palette (31) eingearbeitete Gewindebohrung (34) eingeschraubt sind.

11. Palette nach einem oder mehreren der Ansprüche 1 bis 10, dadurch gekennzeichnet, dass die Spannbolzen (33) durch die Kraft einer oder mehrerer an der Palette (31) abgestützter Druckfedern (41) beaufschlagt sind.

12. Palette nach einem oder mehreren der Ansprüche 1 bis 10, dadurch gekennzeichnet, dass die Spannbolzen (33') auf der den Aufsatzspannbacken (21) abgewandten Seite mit einem in Verstellrichtung von Druckmittel beaufschlagbaren Verstellkolben (42) versehen sind.

13. Palette nach Anspruch 12, dadurch gekennzeichnet, dass die Spannbolzen (33') mittels einer auf diese in Richtung der Aufsatzspannbacken (21) einwirkenden Feder (47) vorgespannt sind.

14. Palette nach einem oder mehreren der Ansprüche 1 bis 10, dadurch gekennzeichnet, dass die Spannbolzen (33'') auf der den Aufsatzspannbacken (21) abgewandten Seite mit einem beidseitig von Druckmittel beaufschlagbaren Verstellkolben (42'') versehen sind.

15. Palette nach einem oder mehreren der Ansprüche 1 bis 13, dadurch gekennzeichnet, dass auf jeder Seite einer Ausnehmung (32) jeweils zwei in radialer Richtung hintereinander angeordnete achssenkrecht auf die Aufsatzspannbacken (21) einwirkende Spannbolzen (33; 33'; 33'') fluchtend zueinander angeordnet sind.

16. Palette nach einem oder mehreren der Ansprüche 1 bis 14, dadurch gekennzeichnet, dass zur Aufnahme unterschiedlich hoch bemessener Aufsatzspannbacken (21) in den Ausnehmungen (32) der Palette (31) sich in Achsrichtung erstreckende Einsatzstücke (Bund 54) auswechselbar angeordnet sind.

17. Palette nach einem oder mehreren der Ansprüche 1 bis 16, dadurch gekennzeichnet, dass die Grundbacken (4) mit einer axial verstellbaren Federraste (15) und die Aufsatzspannbacken (21) mit einer mit dieser zusammenwirkenden Aufnahmebohrung (30) versehen sind, in die die Raststifte (16) der Federrasten (15) bei mit den Grundbacken (4) verriegelten Aufsatzspannbacken (21) eingreifen.

18. Palette nach Anspruch 17, dadurch gekennzeichnet, dass an der Palette (31) ein in die Aufnahmebohrung (30) der Aufsatzspannbacken (21) eingreifender Entriegelungsbolzen (51) angebracht ist, mittels dem der Raststift (16) der Federraste (15) zum Entkuppeln der Aufsatzspannbacken (21) von den Grundbacken (4) betätigbar ist.

19. Palette nach Anspruch 18, dadurch gekennzeichnet, dass die Einsatzstücke durch einen an dem in die Palette (31) eingeschraubten Entriegelungsbolzen (51) angeformten vorzugsweise mehrkantig gestalteten Bund (54) gebildet sind.

20. Palette nach einem oder mehreren der Ansprüche 1 bis 19, dadurch gekennzeichnet, dass die Palette (31) auf der den Ausnehmumgen (32) gegenüberliegenden Seite mit einem in Achsrichtung abstehenden Bund (55), mit Aufnahmebohrungen od. dgl. zur Einspannung in einer Zustellvorrichtung (56) versehen sind.

21. Palette nach einem oder mehreren der Ansprüche 1 bis 20, dadurch gekennzeichnet, dass die Palette (31) in deren Stirnfläche eingearbeitete vorzugsweise zwischen den Ausnehmungen (32) angeordnete und mit einer Hinterschneidung (58) versehene Aufhängebohrungen aufweist.

22. Palette nach einem oder mehreren der Ansprüche 1 bis 21, dadurch gekennzeichnet, dass die in die Palette (31) einsetzbaren Aufsatzspannbacken (21) jeweils aus einer Kassette (27), in deren Seitenflächen die Ausnehmungen (23, 23'') zur Aufnahme der Spannbolzen (33; 33'; 33'') eingesetzt sind, und einem auswechselbar mit der Kassette (27) verbundenen an deren radial inneren und/oder äusseren Stirnflächen angebrachten Spanneinsatz (28) zusammengesetzt sind.

**Claims**

1. Pallet (31) for retaining auxiliary jaws (21) being fixable to the base jaws (4) of a chuck (1), whereby the pallet has radially extending openings (32) being open at the front side and staggered each other according to the division of the base jaws in the chuck body of the chuck and accomodating the auxiliary jaws characterized in that in order to support the auxiliary jaws (21) in the openings (32) of the pallet (31) one or more clamping bolts (33; 33'; 33'') shiftable within limits normal to the longitudinal axis of the auxiliary jaw and located biased by a pressure power are inserted at both sides of each opening (32), by means of which clamping bolts the auxiliary jaws (21) may be clamped in a certain position in the pallet (31) and which bolts may be loosened for removing the auxiliary jaws (21).

2. Pallet of claim 1, characterized in that the auxiliary jaws (21) are provided with grooves (23; 23'') in their lateral surfaces, in which grooves clamping bolts (33; 33'; 33'') are lockable.

3. Pallet of claim 1 or 2, characterized in that in order to limit the motion of the clamping bolts (33; 33'; 33'') each of same is provided with a stop surface (39) preferably in the shape of a collar (38) being part of the respective clamping bolt, which collar cooperates with a counter surface (37) at the pallet (31) or at an intermediate part (socket 36) inserted into the pallet.

4. Pallet of one or more of the claims 1 through 3, characterized in that for centering the auxiliary jaws (21) in the openings (32) of the pallet (31) the clamping bolts (33; 33'; 33'') are provided with a stop surface (40; 49) co-operating with the auxiliary jaws (21), whereby the distance between the stop surface (40; 49) and the stop surface (39) is defined in such, that in the end position of the clamping bolts (33; 33'; 33'') the auxiliary jaws (21) are held concentric in the openings (32).

5. Pallet of one or more of the claims 1 through 4, characterized in that the ends (40) of the clamping bolts (33; 33') extending into the auxiliary jaws (21) and the grooves (23) of the auxiliary jaws (21) are wedge shaped or conical shaped.

6. Pallet of one or more of the claims 1 through 4, characterized in that with the auxiliary jaws' (21) grooves (23'') shaped as cylindrical bores and accommodating the ends (40'') of the clamping bolts (33'') the latter are provided with a collar (48) to engage the auxiliary jaws (21).

7. Pallet of one or more of the claims 1 through 6 characterized in that the auxiliary jaws (21) are guided in the openings (32) of the pallet (31) with lateral clearance.

8. Pallet of one or more of the claims 1 through 7, characterized in that the openings (32) in the pallet (31) are shaped as uninterrupted flat openings.

9. Pallet of one or more of the claims 1 through 8, characterized in that the intermediate parts containing the clamping bolts (33'; 33'') are shaped as a sleeve (35) having a clearance opening (36).

10. Pallet of one or more of the claims 1 through 9, characterized in that the sleeves (35) are positioned adjustably in the direction of the axis, preferably driven into a thread (34) in the pallet (31).

11. Pallet of one or more of the claims through 10, characterized in that the clamping bolts (33) are forced under the pressure of one or more pressure springs (41) engaging the pallet (31).

12. Pallet of one or more of the claims 1 through 10, characterized in that the clamping bolts (33') at the side apart from the auxiliary jaws (21) are provided with an adjusting piston (42) drivable by pressure means in the direction of adjustment.

13. Pallet of claim 12, characterized in that the clamping bolts (33') are biased by a spring (47) acting in direction of the auxiliary jaws (21).

14. Pallet of one or more of the claims 1 through 10 characterized in that the clamping bolts (33'') at the side apart from the auxiliary jaws (21) are provided with an adjusting piston (42'') forced by pressure means on both sides.

15. Pallet of one or more of the claims 1 through 13, characterized in that at each side of an opening (32) two clamping bolts (33; 33''; 33') are positioned aligning each other and radially one behind the other and acting normal against the auxiliary jaws (21).

16. Pallet of one or more of the claims 1 through 14, characterized in that for the accomodation of auxiliary jaws (21) having different heights in the opening (32) of the pallet (31) in the direction of the axis extending insert parts (collar 54) are removably provided.

17. Pallet of one or more of the claims 1 through 16, characterized in that the base jaws (4) are provided with an axially adjustable spring biased detent (15) and the auxiliary jaws (21) are provided with a bore (30), into which notch pins (16) of the detent (15) extend when the auxiliary jaws (21) are locked with the base jaws (4).

18. Pallet of claims 17, characterized in that an unlocking bolt (51) is mounted to the pallet (31) which bolt extends into the opening (30) and by means of which bolt the notch pin (16) of the spring biased detent (15) for loosening the auxiliary jaws (21) from the base jaws (4) may be handled.

19. Pallet of claims 18, characterized in that the insert pieces are incorporated by a preferably multi-edged collar (54) being part of the unlocking bolt (51) screwed into the pallet (31).

20. Pallet of one or more of the claims 1 through 19, characterized in that the pallet (31) at the side opposite from the opening (32) is provided with a collar (55) extending in the direction of the axis, with openings or the like for clamping in a driving device (56).

21. Pallet of one or more of the claims 1 through 20, characterized in that the pallet (31) has suspension bores with clearance grooves (58) in the front surface of the pallet preferably between the openings (32).

22. Pallet of one or more of the claims 1 through 21, characterized in that the auxiliary jaws (21) to be inserted into the pallet (31) are assembled by a cassette (27), in the lateral surfaces of which the grooves (23, 23'') for the accommodation of the clamping bolts (33; 33'; 33'') are inserted, and are further assembled by a clamping insert (28) removably connected to the cassette (27) which insert is mounted to the radially inner and/or outer front surfaces.

**Revendications**

1. Palette (31) pour le support de mâchoires de serrage rapportées (21) enclenchables avec les mâchoires de base (4) d'un mandrin de serrage (1). La palette avec les mâchoires de serrage rapportées présente des évidements (32) ouverts latéraux et dirigés radialement, décalés à l'opposé dans le corps de mandrin du mandrin de serrage ainsi désigné, de sorte que pour le maintien des mâchoires de serrage rapportées (21) dans les évidements (32) de la palette (31) il a été inséré des deux côtés de chaque évidement (32) un ou plusieurs boulons de serrage (33; 33'; 33'') soumis à une force de pression et disposés de façon déplacable (verticalement par rapport à l'axe longitudinal de la mâchoire de serrage rapportée) et au moyen desquels les mâchoires rapportées (21) sont serrables dans une position définie dans la palette (31) et déverrouillables pour le retrait des mâchoires de serrage rapportées (21).

2. Palette selon le droit 1, ainsi désigné, de sorte que les mâchoires de serrage rapportées (21) sont munies d'évidements (23; 23'') dans leurs faces latérales dans lesquelles les boulons de serrage (33; 33'; 33'') sont encliquetables.

3. Palette selon le droit 1 ou 2, ainsi désigné, de sorte que pour la limitation du mouvement de réglage des boulons de serrage (33; 33'; 33'') ceux-ci sont munis d'une face de butée (39) ayant la forme d'un collet (38) agissant sur la palette (31) avec un élément intermédiaire (douille 36) ou une face opposée (37) sur celui-ci.

4. Palette selon un ou plusieurs des droits 1 à 3, ainsi désigné, de sorte que pour le centrage des mâchoires de serrage rapportées (21) dans les évidements (32) de la palette (31), les boulons de serrage (33; 33'; 33'') sont munis d'une surface de portée (40; 49) agissant avec les mâchoires de serrage rapportées (21), d'où l'écartement entre celles-ci et la surface de butée (39) est déterminé de sorte qu'en position finale des boulons de serrage (33; 33'; 33''), les mâchoires de serrage rapportées (21) sont centrées dans les évidements (32).

5. Palette selon un ou plusieurs des droits 1 à 4, ainsi désigné, de sorte que les extrémités (40) des boulons de serrage (33; 33') en prise dans les mâchoires de serrage rapportées (21) et les évidements (23) des mâchoires de serrage rapportées (21)

en prise avec celles-ci sont conçues de préférence de façon conique.

6. Palette selon un ou plusieurs des droits 1 à 4, ainsi désigné, de sorte qu'aux perçages cylindriques, les extrémités (40'') sont munies d'un collet (48) pour l'appui sur les mâchoires de serrage rapportées (21). Les boulons de serrage (33'') ont à leur extrémité les évidements-support (23'').

7. Palette selon un ou plusieurs des droits 1 à 6, ainsi désigné, de sorte que les mâchoires de serrage rapportées (21) sont guidées avec un jeu latéral dans les évidements (32) de la palette (31).

8. Palette selon un ou plusieurs des droits 1 à 7, ainsi désigné, de sorte que les évidements (32) usinés dans la palette (31) sont conçus en tant que cavité à face lisse.

9. Palette selon un ou plusieurs des droits 1 à 8, ainsi désigné, de sorte que les éléments intermédiaires supportant les boulons de serrage (33; 33'; 33'') sont conçus en tant que douilles (35) insérées dans la palette (31) et présentant un perçage de support (36).

10. Palette selon un ou plusieurs des droits 1 à 9, ainsi désigné, de sorte que les douilles (35) disposées de façon réglable dans le sens de l'axe sont usinées de préférence dans un perçage fileté (34) usiné dans la palette (31).

11. Palette selon un ou plusieurs des droits 1 à 10, ainsi désigné, de sorte que les boulons de serrage (33) sont actionnés par la force d'un ou plusieurs ressorts de pression (41) appuyés sur la palette (31).

12. Palette selon un ou plusieurs des droits 1 à 10, ainsi désigné, de sorte que les boulons de serrage (33') sur le côté des mâchoires de serrage rapportées (21) sont munis d'un piston de réglage (42) actionnable dans le sens de réglage par un fluide hydraulique.

13. Palette selon le droit 12, ainsi désigné, de sorte que les boulons de serrage (33') sont prétendus à l'aide d'un ressort (47) agissant sur ceux-ci dans le sens des mâchoires de serrage rapportées (21).

14. Palette selon un ou plusieurs des droits 1 à 10, ainsi désigné, de sorte que les boulons de serrage (33'') sur le côté des mâchoires rapportées (21) sont munis d'un piston de réglage (42'') actionnable des deux côtés par un fluide hydraulique.

15. Palette selon un ou plusieurs des droits 1 à 13, ainsi désigné, de sorte que sur chaque côté d'un évidement (32) deux boulons de serrage (33; 33'; 33'')

agissant verticalement à l'axe, disposés l'un derrière l'autre dans le sens radial sont placés à fleur.

16. Palette selon un ou plusieurs des droits 1 à 14, ainsi désigné, de sorte que pour la prise des mâchoires de serrage rapportées (21) à différentes hauteurs dans les évidements (32) de la palette (31) les pièces rapportées (collet 54) sont placées de façon à être remplacées dans le sens de l'axe.

17. Palette selon un ou plusieurs des droits 1 à 16, ainsi désigné, de sorte que les mâchoires de base (4) sont équipées d'un cliquet à ressort (15) réglable axialement et les mâchoires de serrage rapportées (21) sont munies d'un perçage de prise agissant avec celles-ci et dans lesquelles les tétons de verrouillage (16) des cliquets à ressort (15) sont en prise avec les mâchoires de base (21) verrouillées avec les mâchoires de base (4).

18. Palette selon le droit 17, ainsi désigné, de sorte que sur la palette (31) il est placé un axe de déverrouillage (51) en prise dans le perçage de prise (30) des mâchoires de serrage rapportées (21) à l'aide du quel la goupille de verrouillage (16) du cliquet à ressort (15) est actionnée pour le désaccouplement des mâchoires de serrage rapportées (21) des mâchoires de base (4).

19. Palette selon le droit 18, ainsi désigné, de sorte que les pièces sont formées par le collet (54), de préférence à plusieurs arêtes du boulon de déverrouillage (51) vissé dans la palette (31).

20. Palette selon un ou plusieurs des droits 1 à 19, ainsi désigné, de sorte que la palette (31) est munie, sur le côté opposé d'évidements (32) avec un collet (55) dépassant dans le sens de l'axe avec perçages de prise ou similaire pour le serrage dans un dispositif (56).

21. Palette selon un ou plusieurs des droits 1 à 20, ainsi désigné, de sorte que la palette (31) présente dans ses faces frontales des perçages de suspension avec une contre-dépouille (58) placée de préférence entre les évidements (32).

22. Palette selon un ou plusieurs des droits 1 à 21, ainsi désigné, de sorte que les mâchoires de serrage rapportées (21) sont insérables dans la palette (31) à partir d'une cassette (27) dont les surfaces latérales comportent les évidements (23, 23'') servant au support des boulons de serrage (33; 33'; 33''). L'élément de serrage (28) est relié à une cassette remplaçable (27) et est muni d'une face frontale radiale intérieure et/ou extérieure.

FIG. 1

FIG. 4

FIG. 5